## Europäisches Patentamt
## European Patent Office
## Office européen des brevets

(11) Veröffentlichungsnummer: **0 136 980**
**B1**

(12) # EUROPÄISCHE PATENTSCHRIFT

(45) Veröffentlichungstag der Patentschrift:
**02.09.87**

(51) Int. Cl.⁴: **G 03 D 15/00,** G 03 B 27/46, G 03 B 17/24

(21) Anmeldenummer: **84810477.4**

(22) Anmeldetag: **01.10.84**

(54) Verfahren und Vorrichtung zur Herstellung von fotografischen Kopien.

(30) Priorität: **05.10.83 CH 5402/83**

(43) Veröffentlichungstag der Anmeldung:
**10.04.85 Patentblatt 85/15**

(45) Bekanntmachung des Hinweises auf die Patenterteilung:
**02.09.87 Patentblatt 87/36**

(84) Benannte Vertragsstaaten:
**CH DE FR GB IT LI**

(56) Entgegenhaltungen:
**EP-A-0 011 086**
**EP-A-0 024 342**
**BE-A-713 613**
**DE-A-2 606 822**
**DE-A-2 626 448**
**DE-A-3 122 276**

(73) Patentinhaber: **GRETAG Aktiengesellschaft, Althardstrasse 70, CH- 8105 Regensdorf (CH)**

(72) Erfinder: **Wahli, Robert, Mühleberg 10, CH- 8107 Buchs (CH)**

(74) Vertreter: **Pirner, Wilhelm, Patentabteilung der CIBA- GEIGY AG Postfach, CH- 4002 Basel (CH)**

LIBER, STOCKHOLM 1987

## Beschreibung

Die Erfindung betrifft ein Verfahren und eine Vorrichtung zur Herstellung von fotografischen Kopien gemäss dem Oberbegriff von Patentanspruch 1 bzw. 7.

Bei der Verarbeitung von Amateuraufträgen in einem Photofinishing-Labor besteht eines der auftretenden Probleme darin, durch geeignete Massnahmen sicherzustellen, dass die in einer Auftragstasche angelieferten Filme (in Rollen-, Scheiben ("Disc-") oder Streifenform) nach dem Kopieren zusammen mit den im Labor erzeugten Bildern wieder mit der Auftragstasche zusammengebracht und in dieser an den Auftraggeber zurückgeschickt werden. Die Vorkehrungen zur Erfüllung dieser Aufgabe bestehen darin, dass der zu kopierende Film nach der Enthahme aus der Auftragstasche mit einer Laufnummer auf einem Klebeetikett versehen wird und dass die gleiche Laufnummer wiederum mittels eines Klebeetiketts auch auf der Auftragstasche angebracht wird (sog. Twin Check-Nummer). So ist es möglich, Film und Auftragstasche nach der vorübergehenden Trennung zum Zweck des Kopierens anschliessend mit Hilfe der Twin Check-Nummer wieder zusammenzubringen. Zur korrekten Erledigung des Auftrags muss jetzt noch für richtige Zuordnung zwischen Film und davon hergestellten Papierkopien gesorgt werden. Hier macht man in der Regel davon Gebrauch, dass die Filme für die Entwicklung und das Kopieren entsprechend ihrer fortlaufenden Numerierung zu einem langen Band zusammengespleisst werden und dass demzufolge auch die davon erzeugten Papierbilder in gleicher Reihenfolge auf einem Papierband zu finden sind. So genügt es dann, beispielsweise das erste Negativ eines Filmes mit dem ersten Papierbild des gleichen Auftrags visuell zu vergleichen und auf diese Weise zu überprüfen, ob Film und Papierbilder zum gleichen Auftrag gehören.

In einer verfeinerten Form dieser Arbeitsweise wird der Film mit einer Farbvideokamera abgetastet, so dass die Negative in vergrösserter Form als Positive auf einem Farbmonitor dargestellt werden können, wodurch der Vergleich mit den Farbbildern leichter und sicherer wird.

Es sind auch Lösungsvorschläge bekannt geworden, bei denen sowohl Filmnegative wie Papierbilder mittels Fernsehmethoden abgetastet und in diesem Fall auf dem gleichen Farbmonitor in gleicher Grösse einander gegenübergestellt werden. Charakteristisch ist auch hier, dass die Prüfung auf Übereinstimmung von Negativ und Positiv durch eine Bedienungsperson zu erfolgen hat. Diese Tätigkeit erfordert hohe Konzentration und ist daher auf die Dauer anstrengend. Darunter leidet schliesslich die Sicherheit der Zuordnung.

Die vorliegende Erfindung setzt sich daher zur Aufgabe ein Verfahren anzugeben, welches eine automatische, maschinelle und von einer Bedienungsperson unabhängige Zuordnung von Auftragstasche, darin enthaltenem Film und von diesem hergestellten Papierkopien am Ende einer Bearbeitungsstrecke ermöglicht. Eine weitere Aufgabe der Erfindung liegt darin, eine geeignete und insbesondere möglichst vorteilhafte Vorrichtung zur Realisierung eines solchen Verfahrens anzugeben.

Das erfindungsgemässe Verfahren und die entsprechende Vorrichtung, die diese Aufgabe lösen, sind in den Patentansprüchen 1 und 7 beschrieben. Besonders zweckmässige Ausgestaltungen und Weiterbildungen ergeben sich aus den abhängigen Ansprüchen.

Die Vorteile des erfindungsgemässen Verfahrens und der entsprechenden Vorrichtung liegen einerseits in der erhöhten Sicherheit bei der Zuordnung von Auftragstasche, Film und Papierbildern, andererseits in einer möglichen Leistungssteigerung beim Schneiden und Verpacken von Film und Papier.

Im folgenden wird die Erfindung anhand der Zeichnung näher erläutert. Es zeigen:

Fig. 1 in stark vereinfachter Form den grundsätzlichen Aufbau einer Vorrichtung zur Herstellung fotografischer Kopien,

Fig. 2-4 in schematischer Darstellung die charakteristischen Verfahrensschritten der Eingangsstation bei drei verschiedenen Anwendungsfällen,

Fig. 5 die für die Erfindung wesentlichen Teile der Kopierstation und

Fig. 6 die erfindungsrelevanten Teile der Endverarbeitungsstation einer erfindungsgemässen Vorrichtung.

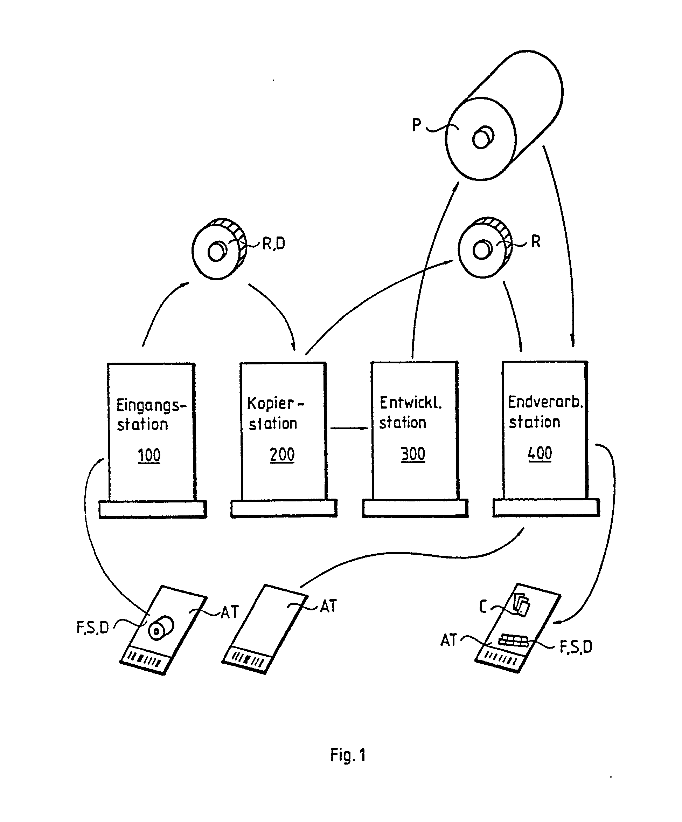

Gemäss Fig. 1 umfasst die Vorrichtung eine Eingangsstation 100, eine Kopierstation 200, eine Entwicklungsstation 300 und eine Endverarbeitungsstation 400.

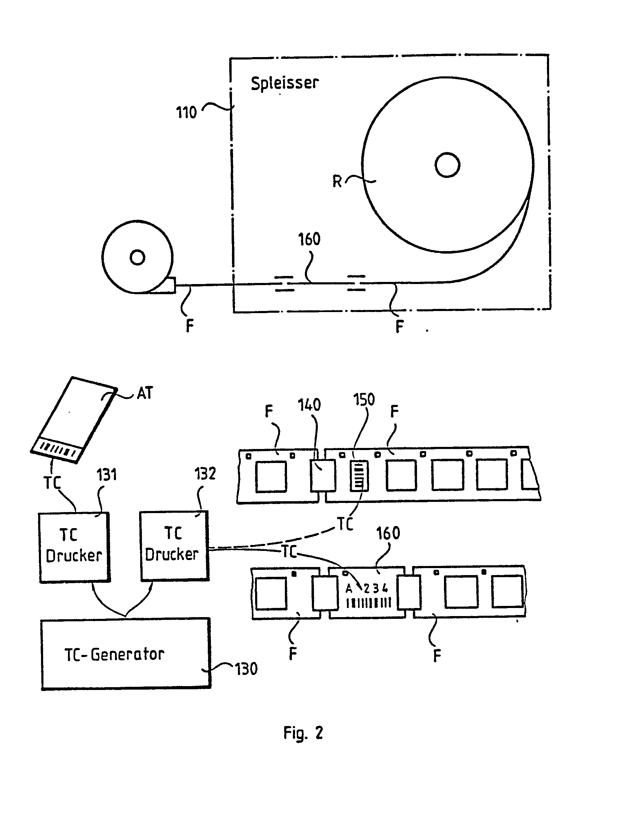

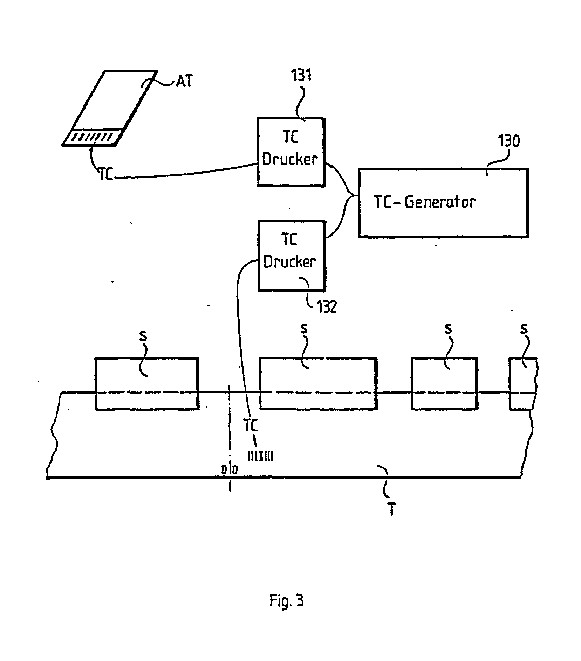

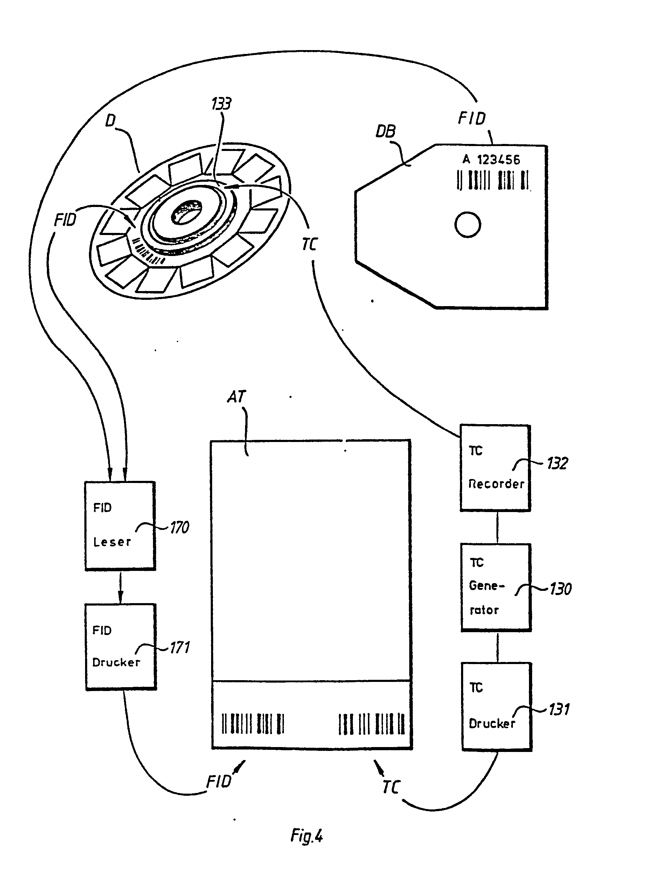

In der Eingangsstation 100 werden die in Auftragstaschen AT angelieferten Vorlagenfilme - es kann sich dabei um Filmscheiben ("Discs") D, Filmrollen F oder Filmstreifen S handeln - aus den Auftragstaschen entnommen und für die weitere Verarbeitung vorbereitet. Filmscheiben D werden, gegebenenfalls nach Entnahme aus ihrem Schutzbehälter DB (Fig. 4), in ein mit einer Spindel versehenes Disc-Magazin eingeführt, Filmrollen F und Filmstreifen S werden, letztere mit Hilfe eines Trägerbands T (Fig. 3), in einem Spleissgerät 110 (Fig. 2) zu einer grösseren Kopierrolle R zusammengefügt. Ferner werden die einzelnen Auftragstaschen AT und die in ihnen angelieferten Filme D, F oder S je mit einer Kontrollnummer (Twin-Check-Nummer) TC versehen und erforderlichenfalls werden, z. B. im Falle von Nachbestellaufträgen, schliesslich noch diverse Auftragsdaten wie Negativnummern, Kopienanzahl etc. eingegeben.

Soweit entspricht die Eingangsstation und ihre Funktionsweise dem Stand der Technik. Im Unterschied zu diesem werden aber bei der Erfindung zur Kennzeichnung von Auftragstaschen AT und Filmen D, F oder S nicht Klebeetiketten mit Klarschrift aufgedruckten Kontrollnummern verwendet, sondern die Kontrollnummern TC werden in Form eines maschinenlesbaren Codes, insbesondere eines Balkencodes auf die Filme und die Tragtaschen vorzugsweise durch Drucken aufgebracht.

Die Abläufe für in Rollen oder in Streifen vorliegende bandförmige Filme sind in den Fig. 2 und 3 dargestellt. In der Eingangsstation 100 sind ein Kontrollnummerngenerator 130 und zwei von diesen gesteuerte Kontrollnummern-Applikatoren 131 und 132 vorgesehen. Der Generator 130 erzeugt für jeden Auftrag eine neue, fortlaufende Kontrollnummer (Twin-Check-Nummer) TC und gibt sie an die beiden Applikatoren 131 und 132 weiter. Der Applikator 131 ist ein Drucker, der die Kontrollnummer TC in Form eines Balkencodes auf die Auftragstasche AT druckt. Der Applikator 132 dient zur Kennzeichnung des Films. Die Kontrollnummer TC kann z. B. unmittelbar nach der Spleißstelle 140 auf ein Anfangsfeld 150 des Films F aufgebracht werden. Bevorzugt werden jedoch beim Spleissen kurze Informationsträgerstreifen 160 zwischen je zwei Filme F eingefügt und die Kontrollnummern TC auf diese Streifen 160 aufgedruckt, zweckmässig sowohl in maschinenlesbarer Form als auch in Klarschrift. Bei Nachbestellaufträgen (Fig. 3), wo die Filme in Form von mehr oder wenier langen Streifen S vorliegen, die mittels eines Trägerbands T zusammgespleisst werden, werden die Kontrollnummern TC zweckmässigerweise auf das Trägerband T gedruckt. Falls der Film noch nicht entwickelt ist (Erstauftrag, Fig. 2) können die Kontrollnummern TC bei entsprechender Ausbildung des Applikators 132 auch optisch auf den Film aufgebracht werden.

Den Fall von Filmscheiben D zeigt Fig. 4. Solche Filme werden bereits bei der Herstellung mit einer Identifikationsnummer FID versehen, welche sowohl auf einer kreisförmigen Spur am Film D als auch aussen auf dem Disc-Schutzbehälter DB in maschinenlesbarer Form und zusätzlich in Klarschrift angebracht ist. Für solche Filme ist in der Eingangsstation 100 neben dem schon erwähnten Kontrollnummern-Generator 130 und den beiden Applikatoren 131 und 132 noch ein FID-Leser 170 und ein FID-Drucker 171 vorgesehen. Der FID-Leser liest die Identifikationsnunmer FID entweder vom Schutzbehälter DB oder von der Filmscheibe D selbst ab und gibt sie an den FID-Drucker 171 weiter, welcher sie dann auf die Auftragstasche AT druckt. Der Generator 130 erzeugt wie gehabt eine laufende Kontrollnummer TC, welche vom Applikator 131 auf die Tasche AT gedruckt wird. Der als Magnetaufzeichnungsgerät ausgebildete Applikator 132 zeichnet die Kontrollnummer TC auf eine auf der Filmscheibe D vorhandene Magnetspur 133 auf.

Bei Disc-Filmen werden also zwei Informationen auf die Auftragstasche AT übertragen. Zur Sicherstellung der Zuordnung von Tasche und Film (und später auch von den vom betreffenden Film erzeugten Kopien) genügt jedoch auch eine der beiden Informationen. Dementsprechend kann die herstellungsseitig bereits auf der Filmscheibe D vorgesehene Identifikationsnummer FID auch direkt als Kontrollnummer verwendet werden und braucht dann natürlich nicht noch extra auf den Film aufgebracht zu werden. Die Verwendung einer gesonderten Kontrollnummer TC hat jedoch den Vorteil, dass diese fortlaufend gewählt werden kann, was in bestimmten Fällen erwünscht bzw. vorteilhaft ist.

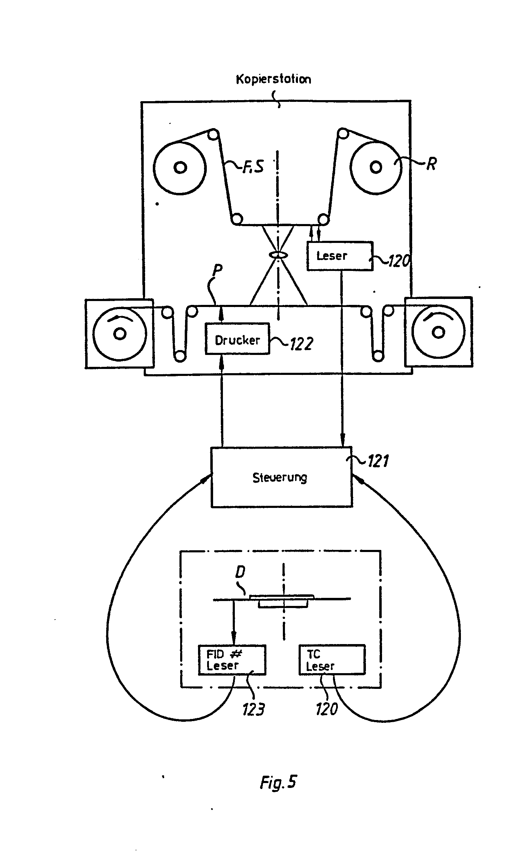

Von der Eingangsstation 100 gelangen die Filme, gegebenenfalls nach Entwicklung, zur Kopierstation 200, wo in üblicher Weise die erforderlichen Kopien durch entsprechendes Belichten von Kopierpapier P erstellt werden (Fig. 5). Um nun später bei der Endverarbeitung die Zuordnung der Papierkopien C zu den jeweiligen Auftragstaschen AT und Filmen F, S oder D sicherzustellen, sind in der Kopierstation 200 gemäss der Erfindung Mittel vorgesehen, welche die auf den Filmen angebrachten Kontrollnummern TC von den Filmen ablesen und auf das Kopierpapier P übertragen. Diese Mittel umfassen für gewöhnlichen bandförmigen Film einen Kontrollnummern-Leser 120, eine Steuerung 121 und einen Drucker 122, und für Filmscheiben D einen zusätzlichen Identifikationsnummern-Leser 123. Selbstverständlich sind die Leser 120 und 123 der Art, in der die Nummern auf den Filmen jeweils angebracht sind, angepasst. Der Thermo-Drucker 122 druckt die Kontrollnummer TC und gegebenenfalls auch die Identifikationsnummer FID auf die Rückseite des Kopierpapiers P. Zur Sicherstellung der Zuordnung genügt es dabei vollkommen, wenn die Nummer(n) pro Auftrag nur ein einziges Mal, vorzugsweise am Auftragsanfang, aufgebracht werden. Selbstverständlich können die Nummern auch bei jedem einzelnen Papierbild aufgedruckt werden.

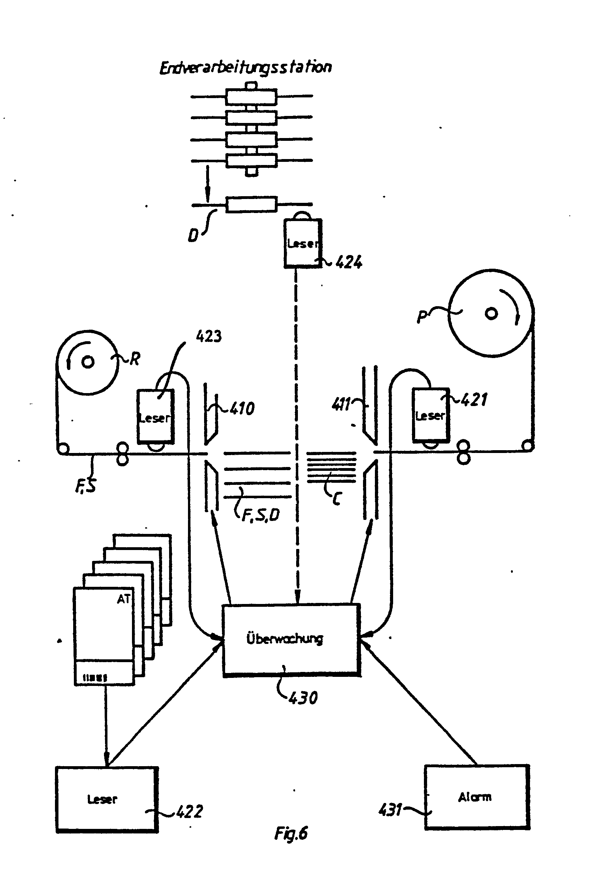

Nach dem Kopieren gelangt die Rolle belichteten Kopierpapiers P in die Entwicklungsstation 300 und von dort zusammen mit der zugehörigen Filmrolle R oder dem entsprechenden Stapel von Filmscheiben D sowie den leeren Auftragstaschen AT zur Endverarbeitungsstation 400 (Fig. 6). Hier sind neben den üblichen Vorrichtungen wie z. B. Schneidgeräten 410 und 411 für Film und Papier zusätzlich noch drei Leser 421, 422 und 423 bzw. 424 für die auf Papier P, Auftragstaschen AT und Film F, S bzw. D vorhandenen Kontrollnummern TC (und gegebenenfalls auch FID) sowie eine mit diesen Lesern verbundene Überwachungsvorrichtung 430 vorgesehen. Letztere überprüft und vergleicht die jeweils abgelesenen Kontrollnummern und blockiert die Schneidvorrichtung(en), falls Nicht-Übereinstimmung und damit eine fehlerhafte Zuordnung von Film, Papier und Auftragstaschen festgestellt wird. Gleichzeitig wird irgendein Alarm 431 aktiviert.

Auf diese Weise wird also die Zuordnung von Film, Auftragstaschen und Kopien vollautomatisch überwacht, was einerseits die Fehlerwahrscheinlichkeit stark vermindert und andererseits einen wesentlich höheren Durchsatz ermöglicht.

**Patentansprüche**

1. Verfahren zur Herstellung von fotografischen Kopien, wobei Auftragstasche (AT) und zugehöriger Vorlagenfilm (F, S, D) in einer Eingangsstation (100) je mit der gleichen Kontrollnummer (TC) gekennzeichnet werden, in einer Kopierstation (200) vom Film auf einer Kopierpapierbahn (P) die gewünschte Anzahl von Papierbildern (C) erzeugt wird und die Papierbilder (C) nach dem Entwickeln in einer Endverarbeitungsstation (400) mit dem ihnen zugrundeliegenden Film und der zugehörigen Auftragstasche zusammengebracht werden, dadurch gekennzeichnet, dass eine maschinell lesbare Kontrollnummer (TC) verwendet wird, die sich frühestens nach einer grossen Anzahl von Aufträgen wiederholt, dass in der Kopierstation (200) die auf dem Film (F,S,D) aufgebrachte Kontrollnummer (TC) maschinell gelesen und in maschinell lesbarer Form zumindest am Anfang oder am Ende des Auftrags, der durch die Gesamtheit der Papierbilder von dem jeweiligen Film definiert ist, auf die Kopierpapierbahn (P) übertragen wird, und dass in der Endverarbeitungsstation (400) die Kontrollnummern (TC) auf Auftragstasche (AT), Film (F, S, D) und Kopierpapierbahn (P) maschinell abgelesen und miteinander verglichen werden, wobei bei Nichtübereinstimmung eine Notreaktion ausgelöst wird.

2. Verfahren nach Anspruch 1, dadurch gekennzeichnet, dass die Notreaktion darin besteht, dass das Schneiden des Films (F, S) und der Kopierpapierbahn (P) verhindert und ein Alarm (431) ausgelöst wird.

3. Verfahren nach Anspruch 1 oder 2, dadurch gekennzeichnet, dass für Filme (D) mit bereits bei ihrer Herstellung aufgebrachten Identifikationsnummern (FID) diese direkt oder als zusätzliche Kontrollnummern verwendet werden.

4. Verfahren nach Anspruch 3, dadurch gekennzeichnet, dass bei Filmen mit einer herstellungsseitig vorgesehenen Magnetspur (133) die Kontrollnummern (TC) auf diese Magnetspur aufgezeichnet werden.

5. Verfahren nach Anspruch 1 oder 2, dadurch gekennzeichnet, dass zur Kennzeichnung von Filmen in Streifenform die einzelnen Filme (F) unter Einfügung je eines kurzen Informationsträgerstreifens (160) zu einem durchgehenden Streifen (R) zusammengefügt und die Kontrollnummern (TC) auf diese Informationsträgerstreifen (160) aufgebracht werden.

6. Verfahren nach einem der Ansprüche 1-5, dadurch gekennzeichnet, dass die Kontrollnummern (TC) auf die Kopierpapierbahn (P) vorzugsweise in Form eines Balken-Codes aufgedruckt werden.

7. Vorrichtung zur Herstellung von fotografischen Kopien mit einer Eingangsstation (100), in der die in Auftragstaschen (AT) angelieferten Filme (F, S, D) aus diesen entnommen und Auftragstasche und Film mit je gleichen Kontrollnummern (TC) gekennzeichnet werden, mit einer Kopierstation (200), in der von jedem Film auf einer Kopierpapierbahn (P) die gewünschte Anzahl von Papierbildern (C) erzeugt wird, einer Entwicklungsstation (300) für die Papierbilder (C) und einer Endverarbeitungsstation (400), in der Auftragstaschen (AT), zugehörige Filme (F, S, D) und davon erstellte Papierbilder (C) zusammengeführt werden, dadurch gekennzeichnet, dass die Eingangsstation (100) eine erste Kennzeichnungsvorrichtung (130,131, 132) aufweist, welche jeden Film (F, S, D) und die zugehörige Auftragstasche (AT) mit einer Kontrollnummer (TC) in maschinenlesbarer Form kennzeichnet, wobei im Falle von Filmen (D) mit bereits herstellungsseitig angebrachten maschinenlesbaren Identifikationsnummern (FID) gegebenenfalls auch diese abgelesen und direkt oder als zusätzliche Kontrollnummern verwendet werden können, dass ferner die Kopierstation (200) mit einer zweiten Kennzeichnungsvorrichtung (120, 121, 122) ausgestattet ist welche die auf den Filmen (F, S, D) angebrachten Kontrollnummern (TC) abliest und pro Auftrag zumindest einmal am Anfang oder am Ende auf die Kopierpapierbahn (P) in ebenfalls maschinell lesbarer Form überträgt, und dass die Endverarbeitungsstation (400) mit einer Überwachungsvorrichtung (430, 421, 422, 423) versehen ist, welche die Kontrollnummern (TC) von den Auftragstaschen (AT), Filmen (F, S, D) und der Kopierpapierbahn (P) in der Reihenfolge ihres Eintreffens maschinell abliest, vergleicht und bei Nichtübereinstimmen eine Notreaktion auslöst.

8. Vorrichtung nach Anspruch 7, dadurch gekennzeichnet, dass die Überwachungsvorrichtung (430) die in der Endverarbeitungsstation (400) befindlichen Schneidorgane (410, 411) für Film und Kopierpapierbahn bei Nichtübereinstimmen der Kontrollnummern blockiert.

9. Vorrichtung nach Anspruch 7, dadurch gekennzeichnet, dass die Eingangsstation (100) eine Spleissvorrichtung (110) enthält, welche die einzelnen Filme (F) unter Einfügung eines kurzem Informationsträgerstreifens (160) an jeder Verbindungsstelle zu einem durchgehenden Streifen (R) zusammenfügt.

10. Vorrichtung nach Anspruch 9, dadurch gekennzeichet, dass die erste Kennzeichnungsvorrichtung (130, 131, 132) die Kontrollnummern (TC) für die Filme auf diese Informationsträgerstreifen (160) vorzugsweise in Form eines Balken-Codes aufbringt.

## Claims

1. Process for the preparation of photographic copies wherein the order envelope (AT) and the corresponding master film (F, S, D) are identified in an inlet station (100) by the same control number (TC), in a copy station (200) the desired number of paper images (C) produced from the film on a web of copy paper (P) and the paper images (C) brought together after developing in a final processing station (400) with the film upon which they are based and the corresponding order envelope, characterized in that a machine readable control number (TC) is used, which is repeated at the earliest after a large number of orders, that in the copy station (200) the control number (TC) applied to the film (F, S, D) is read by machine and transferred in a machine readable form at least at the beginning or the end of an order, defined by the entirety of the paper images from the film involved, to the web (P) of copy paper, and that in the final processing station (400) the control numbers (TC) on the order envelope (AT), the film (F, S, D) and the web of copy paper (P) are read by machine and compared with each other, whereby in case of a lack of agreement an emergency reaction is actuated.

2. Process according to Claim 1, characterized in that the emergency reaction consists of that the cutting of the film (F, S) and of the web of copy paper (P) is prevented and an alarm (431) is actuated.

3. Process according to Claim 1 or 2, characterized in that for films (D) to which identification numbers (FID) had already been applied in the course of their production, said numbers are used directly or as supplemental control numbers.

4. Process according to Claim 3, characterized in that in the case of films with magnetic tracks (133) applied during their production the control numbers (TC) are recorded on said magnetic track.

5. Process according to Claims 1 or 2, characterized in that for the identification of films in the strip form, the individual films (F) are combined with the insertion of a short information carrier strip (160) into a continuous strip (R) and the control numbers (TC) applied to said information carrier strips (160).

6. Process according to one of Claims 1-5, characterized in that the control numbers (TC) are printed on the web of copy paper (P) preferably in the form of a bar code.

7. Apparatus for the preparation of photographic copies with an inlet station (100), wherein the films (F, S, D) supplied in order envelopes (AT) are taken from said envelopes and the order envelope and the film both identified by the same control numbers (TC), with a copy station (200) wherein on a web of copy paper (P) from each film the desired number of paper images (C) is produced, a developing station (300) for the paper images (C) and a final processing station (400), wherein the order envelopes (AT), the corresponding films (F, S, D) and the paper images (C) prepared from that are brought together, characterized in that the inlet station (100) comprises a first identification device (130, 131, 132) which identifies each film (F, S, D) and the corresponding order envelope (AT) with a control number (TC) in a machine readable form, wherein in the case of films (D) to which machine readable identification numbers (FID) had already been applied in production, these are optionally also read and may be used directly or as supplemental control numbers, that further the copy station (200) is equipped with a second identification device (120, 121, 122), which reads the control numbers (TC) applied to the films (F, S, D) and transfers per order at least at the beginning or the end of the web of copy paper (P) again in a machine readable form and that the final processing station (400) is equipped with a monitoring device (430, 421, 422, 423), which reads the control numbers (TC) on the envelope stations (AT), films (F, S, D) and the web of copy paper (P) in the order of their arrival, compares them and in case of a lack of agreement actuates an emergency reaction.

8. Apparatus according to Claim 7, characterized in that the monitoring device (430) blocks the cutting elements (410, 411) located in the final processing station (400) for the film and the web of copy paper in case of a lack of agreement of the control numbers.

9. Apparatus according to Claim 7, characterized in that the inlet station (100) comprises a splicing device (110) which combines the individual films (F) with the insertion of a short information carrier strip (160) at each connecting station into a continuous strip (R).

10. Apparatus according to Claim 9, characterized in that the first identification device (130, 131, 132) applies the control numbers (TC) for the films to said information carrier strips (160) preferably in the form of a bar code.

## Revendications

1. Procédé pour produire des copies ou épreuves de tirages photographiques selon lequel un sachet (AT) de commande et le film (F, S, D) correspondant, constituant un original, sont caractérisés dans un poste (100) d'entrée chacun avec le même numéro (TC) de contrôle, il est obtenu, dans un poste (200) de tirage de copies ou d'épreuves, le nombre voulu d'épreuves (C) sur papier, du film sur une bande (P) de papier pour obtention de copies, et, après le développement, les épreuves (C) sur papier sont regroupées dans un poste (400) de traitement de finition avec le film à partir duquel elles ont été tirées et avec le sachet de commande correspondant, procédé caractérisé en ce qu'on utilise un numéro (TC) de contrôle lisible par des machines, qui n'est répété au plus tôt qu'après un grand nombre de commandes, en ce que, au poste (200) de tirage d'épreuves ou de copies, le numéro (TC) de contrôle appliqué sur le film (F, S, D) est lu par des machines et est reporté sur la bande de papier (P) pour tirage d'épreuves ou copies, sous forme lisible par des machines, au moins au début ou à la fin de l'exécution de la commande définie par la totalité des tirages sur papier provenant du film en cause, et en ce que, au poste (400) de traitement de finition, les numéros (TC) de contrôle sont lus par des machines sur le sachet (AT) de commande, le film (F, S, D) et la bande de papier (P) pour tirage de copies, et ces numéros sont comparés les une aux autres, avec déclenchement d'une réaction correspondant à un état de danger en cas de non concordance entre ces numéros.

2. Procédé selon la revendication 1, caractérisé en ce que la réaction correspondant à un état de danger consiste à empêcher le découpage du film (F, S) et de la bande de papier (P) pour obtention de copies, et en un déclenchement d'une alarme (431).

3. Procédé selon la revendication 1 ou 2, caractérisé en ce que, pour des films (D) comportant déjà, lors de leur fabrication, des numéros (FID) d'identification appliqués, on utilise ces numéros directement ou comme des numéros de contrôle supplémentaires.

4. Procédé selon la revendication 3, caractérisé en ce que, dans le cas de films comportant une trace magnétique (133) prévue au moment de la fabrication, les numéros (TC) de contrôle sont appliqués sur cette trace magnétique.

5. Procédé selon la revendication 1 ou 2, caractérisé en ce que, pour caractériser des films sous forme de bandes, on regroupe les films (F) individuels, avec introduction à chaque fois d'un court morceau de bande (160) porteur de renseignements ou informations, pour obtenir une bande (R) continue, et l'on applique les numéros (TC) de contrôle sur ce morceau de bande (160) porteur de renseignements ou informations.

6. Procédé selon l'une des revendications 1 à 5, caractérisé en ce que les numéros (TC) de contrôle sont imprimés, avantageusement sous forme d'un code à barres, sur la bande de papier (P) pour tirage de copies.

7. Appareil pour produire des copies ou tirages photographiques, comportant un poste (100) d'entrée dans lequel les films (F, S, D) arrivés ou livrés dans des sachets (AT) de commande sont retirés de ces sachets et les sachets de commande et les films sont caractérisés chacun par le même numéro (TC) de contrôle, un poste (200) de tirage de copies ou épreuves, dans lequel il est tiré de chaque film le nombre voulu d'épreuves (C) sur le papier d'une bande de papier (P) pour obtention de copies ou d'épreuves, un poste (300) de développement des tirages (C) sur papier et un poste (400) de traitement de finition dans lequel les sachets (AT) de commande, les films (F, S, D) correspondants et les épreuves (C) de tirage sur papier qui en sont obtenues sont regroupés, appareil caractérisé en ce que le poste (100) de départ présente un premier dispositif (130, 131, 132) de caractérisation qui caractérise à l'aide d'un numéro (TC) de contrôle, sous forme lisible par des machines, chaque film (F, S, D) et le sachet (AT) de commande correspondant et, dans le cas de films (D) sur lesquels des numéros (FID) d'identification, lisibles par des machines, sont déjà appliqués lors de la fabrication, ce dispositif peut également lire ces numéros et les utiliser directement comme numéros de contrôle ou à titre de numéros de contrôle supplémentaires; en ce qu'en outre le poste (200) de tirage d'épreuves ou copies est équipé d'un second dispositif (120, 121, 122) de caractérisation qui lit les numéros (TC) de contrôle appliqués sur les films (F, S, D) et les reporte, sous une forme également lisible par des machines, au moins une fois par commande au début ou à la fin sur la bande de papier (P) et en ce que le poste (400) de traitement de finition est équipé d'un dispositif (430, 421, 422, 423) de surveillance qui lit à l'aide de machines les numéros (TC) de contrôle sur les sachets (AT) de commande, les films (F, S, D) et la bande de papier (P) pour obtention de copies ou épreuves, compare ces numéros et, en cas de non concordance déclenche une réaction correspondant à un état de danger.

8. Appareil selon la revendication 7, caractérisé en ce que le dispositif (430) de surveillance arrête, en cas de non concordance entre les numéros de contrôle, les organes (410, 411), se trouvant dans le poste (400) de traitement final, et destinés à découper le film et la bande de papier pour obtention d'épreuves ou copies.

9. Appareil selon la revendication 7, caractérisé en ce que le poste (100) de départ contient un dispositif (110) de collage, qui regroupe les films (F) individuels, en introduisant un court morceau de bande (160) porteur de renseignements ou informations à chaque endroit de liaison, pour obtenir une bande (R) continue.

10. Appareil selon la revendication 9, caractérisé en ce que le premier dispositif (130, 131, 132) de caractérisation applique, avantageusement sous forme d'un code à barres, les numéros (TC) de contrôle des films sur ces morceaux de bande (160) porteurs de renseignements.

Fig. 1

Fig. 2

AT

131

TC Drucker

130

TC-Generator

TC

TC Drucker

132

S

S

S

S

TC

IIIIIIII

olo

T

Fig. 3

5

Fig.4

Fig. 5

Fig.6